# EUROPÄISCHE PATENTSCHRIFT

(11) **EP 3 052 574 B1**
(45) Veröffentlichungstag und Bekanntmachung des Hinweises auf die Patenterteilung: **14.06.2017**
(21) Anmeldenummer: 14776997.0
(22) Anmeldetag: 11.09.2014
(51) Int. Cl.: C09D 13/00

(54) **MINE FÜR SCHREIB-, ZEICHEN UND/ODER MALGERÄTE SOWIE VERFAHREN ZU DEREN HERSTELLUNG**
REFILL FOR WRITING, DRAWING AND/OR PAINTING DEVICES AND METHOD FOR THE PRODUCTION THEREOF
MINE LIÉE À UN POLYMÈRE POUR INSTRUMENTS D'ÉCRITURE, DE DESSIN ET/OU DE PEINTURE ET PROCÉDÉ DE FABRICATION

(30) Priorität: 01.10.2013 DE 102013016355
(43) Veröffentlichungstag der Anmeldung: 10.08.2016
(73) Patentinhaber: STAEDTLER Mars GmbH & Co. KG, 90427 Nürnberg (DE)
(72) Erfinder: THIES, Andreas, 91090 Effeltrich (DE); JAKOB, Martin, 96103 Hallstadt (DE); ADLER, Jürgen, 91096 Kleinseebach (DE)
(86) Internationale Anmeldenummer: PCT/EP2014/002461
(87) Internationale Veröffentlichungsnummer: WO 2015/049026

(56) Entgegenhaltungen:
- WO-A1-2010/006742
- WO-A1-2010/006744

## Beschreibung

Die Erfindung betrifft Minen für Schreib-, Zeichen und/oder Malgeräte auf Basis von polymeren Bindemitteln, sowie ein Verfahren zu deren Herstellung.

Polymerminen auf Basis von rohölabgeleiteten Polymeren zum Zeichnen, Schreiben und/oder Malen sind prinzipiell bekannt.

Unter polymergebundenen Minen auf Farb- und Graphitbasis zum Schreiben, Zeichnen und/oder Malen versteht man einerseits Minen, die fest in Holz oder andere spitzbare Materialien eingebracht werden und andererseits Minen, die verschiebbar in einer biegesteifen Hülle gelagert sind. Beispiele hierfür sind holzgefasste Bleistifte und Minen für mechanische Stifte, beispielweise so genannte Druckbleistifte oder Fallstifte. Dabei weisen die Minen üblicherweise Außendurchmesser im Bereich von etwa 0,3 mm bis 6 mm auf.

So sind beispielweise polymergebunden Farb- und Graphitminen aus der WO 2010/006742 A1 bekannt. Derartige Minen enthalten ein polymeres Bindemittel, Wachs, Palmöl und Füllstoffe.
Nachteilig bei derartigen Minen ist, dass die meisten Polymerminen auf Basis von Rohölprodukten aufgebaut sind und daher direkt vom Preis und der Verfügbarkeit des Öls abhängig sind. Des Weiteren ist es als nachteilig anzusehen, dass Minen, die auf Basis von rohölabgeleiteten Polymeren hergestellt werden, natürlich vorkommende, nicht regenerierbare Ressourcen verbrauchen. Die ökologische Herstellung eines Stiftes aus Polymeren auf Basis nachwachsender Rohstoffe ist damit nicht möglich.

Des Weiteren sind polymergebundene Farb- und Graphitminen aus der US 2988784 A bekannt. Derartige Minen enthalten ein polymeres Bindemittel auf Basis von Cellulose Ester, insbesondere Celluloseacetat, Wachs und Füllstoff. Nachteilig bei derartigen Minen ist, dass die Minen zwar aus einem natürlichen Rohstoff aufgebaut sind und deshalb komplett abgebaut werden können, sie allerdings zu einem Großteil aus dem natürlich vorkommenden Rohstoff Holz bestehen. Durch die hohe Nachfrage nach Holz, wird es allerdings immer schwieriger und teurer qualitativ hochwertiges Holz zu erstehen. Zusätzlich wird das kleiner werdende Vorkommen natürlicher Hölzer durch eine Herstellung der Stifte mit Cellulose Estern stark beansprucht.

**Aufgabe** der Erfindung ist es daher, eine Mine zum Schreiben, Zeichnen und/oder Malen zu schaffen, die die genannten Nachteile nicht aufweist und die insbesondere nicht in Abhängigkeit von Rohöl, sondern rein aus nachwachsenden und abbaubaren Bindemitteln/Polymeren hergestellt werden kann, ohne dabei die primären Eigenschaften, beispielweise die Spitzbarkeit, die Farbgebung, die Festigkeit, die Deckkraft des Abstriches und die Radierbarkeit der Mine zu verlieren.

Die Aufgabe wird durch die Substitution rohölbasierender Polymere mit Polylactiden gelöst. Es wurde damit eine polymergebundene Mine für Schreib, Zeichen und/oder Malgeräte, insbesondere für Bleistifte oder Farbstifte geschaffen, welche mindestens ein Bindemittel, mindestens ein Wachs, mindestens ein Farbmittel und mindestens einen Füllstoff umfasst, wobei die Mine als Bindemittel Polylactid aufweist.

Eine synonyme Bezeichnung für Polylactid ist Polymilchsäure oder auch PLA. Die häufig verwendete Kurzform PLA entstammt dem englischsprachigen Wort polylactic acid.

Es hat sich überraschender Weise herausgestellt, dass durch das Ersetzen von rohölabhängigen Polymeren durch Polylactide, die Eigenschaften, beispielweise die die Spitzbarkeit, die Farbgebung, die Festigkeit, die Deckkraft des Abstriches, die Radierbarkeit, etc. einer Mine nicht beeinträchtigt werden, die Herstellung einer solchen jedoch rohölunabhängig wird. Dadurch wird erreicht, dass die Herstellungskosten der Mine nicht in Abhängigkeit zu den Preisen und der Verfügbarkeit des Rohöls stehen. Außerdem ist eine derart hergestellte Mine schneller abbaubar und bei der Herstellung werden natürlich vorkommende, nicht regenerierbare Ressourcen eingespart.

Der Polylactid-Anteil an der Minenzusammensetzung liegt im Bereich von 10-60 Gew.-%, bevorzugt in einem Bereich von 10 bis 40 Gew. % und besonders bevorzugt im Bereich von 10-25 Gew.-%.

Es hat sich als vorteilhaft erwiesen, wenn die polymergebundene Mine

| | |
|---|---|
| 10 bis 60 Gew.-% | Polylactid |
| 2 bis 25 Gew.-% | Wachs |
| 15 bis 70 Gew.-% | Füllstoffe |
| 0 bis 5 Gew.-% | Palmöl |
| 0 bis 30 Gew.% | Farbmittel |

aufweist.

Es hat sich bewährt, wenn das mindestens eine Wachs mindestens eines aus der Gruppe umfassend Fettsäuren, Stearate, Montanwachse, Amidwachse und Paraffine ist. Auch Mischungen aus zwei oder mehreren Wachsen sind einsetzbar.

Besonders bevorzugt ist es dabei, wenn das mindestens eine Wachs Calzium-Stearat und/oder ein Ethylen-Bis-Stearamid (EBS) ist.
Sehr gute Ergebnisse beim Einsatz von Ethylen-Bis-Stearamid (EBS) wurden bei Farbminen erzielt. Bei Verwendung von Calcium-Stearat in Bleiminen wurden sehr gute Ergebnisse erzielt.

Vorteilhafter Weise ist der mindestens eine Füllstoff aus mindestens einem Füllstoff der Gruppe umfassend Graphit, hexagonales Bornitrid, Schichtsilikate, Kreide, Schwerspat, bunte Pigmente und/oder unbunte Pigmente.

Für Bleistiftminen ist dabei insbesondere Graphit oder Graphit in Kombination mit Ruß als farbgebender Füllstoff bevorzugt. Für Farbstiftminen haben sich Kombinationen aus weißen oder farblosen Füllstoffen, wie hexagonales Bornitrid, Schichtsilikate, usw., mit farbgebenden Pigmenten, wie Azo-Pigmente, Phtalocyanine, Dioxazine, Chinacridone, Eisenoxide, Ruß, Graphit, Ultramarin, Eisen-Cyankomplexe bewährt.

Eine bevorzugte Zusammensetzung für eine Bleistiftmine umfasst:

| | |
|---|---|
| 10 bis 60 Gew.-% | Polylactid |
| 2 bis 25 Gew.-% | Wachs |
| 0 bis 5 Gew.-% | Palmöl |
| Rest | Graphit |

Insbesondere weist eine Bleistiftmine auf:

| | |
|---|---|
| 10 bis 25 Gew.-% | Polylactid |
| 5 bis 15 Gew.-% | Wachs |
| 0,1 bis 2,5 Gew.-% | Palmöl |
| Rest | Graphit |

Eine beispielhaft genannte Rezeptur für eine Bleistiftmine umfasst:

| | |
|---|---|
| Polylactid | 20 Gew.-% |
| Calcium-Stearat | 9 Gew.-% |
| Palmöl | 1 Gew.-% |
| Graphit | Rest |

Ein weiteres Rezepturbeispiel für eine Bleistiftmine könnte sich wie folgt zusammensetzen.

| | |
|---|---|
| Polylactid | 38 Gew.-% |
| Calcium-Stearat | 7 Gew.-% |
| Ethylen-Bis-Stearamid | 5 Gew.% |
| Palmöl | 1 Gew.-% |
| Graphit | Rest |

Als Farbmittel für Bleistiftminen wird wie in den Beispielen dargestellt Graphit eingesetzt. Ebenso kann jedoch auch eine Kombination von Graphit und Ruß eingesetzt werden.

Eine Zusammensetzung für eine Farbstiftmine umfasst:

| | |
|---|---|
| 10 bis 60 Gew.-% | Polylactid |
| 2 bis 25 Gew.-% | Wachs |
| 1 bis 30 Gew.-% | Farbmittel |
| Rest | Füllstoffe |

Insbesondere weist eine Farbstiftmine auf:

| | |
|---|---|
| 10 bis 25 Gew.-% | Polylactid |
| 10 bis 20 Gew.-% | Wachs |
| 2 bis 20 Gew.-% | Farbmittel |
| Rest | Füllstoffe |

Eine beispielhafte Rezeptur für eine Farbstiftmine umfasst:

| | |
|---|---|
| Polylactid | 15 Gew.-% |
| Ethylen-Bis-Stearamid | 13 Gew.-% |
| Pigmente | 7 Gew.-% |
| Füllstoffe | 65 Gew.-% |

Als farbgebendes Mittel bei Farbminen können bunte und/oder unbunte Pigmente eingesetzt werden. Als Beispiele für derartige Pigmente seine Azo-Pigmente, Phthalocyanine, Dioxazine, Chinacridone, Eisenoxide, Russ, Graphit, Ultramarin und Eisen-Cyankomplexe genannt.

Als Verfahren zur Herstellung einer erfindungsgemäßen polymergebundenen Mine hat sich das Verfahren der Extrusion bewährt.

Die Erfindungsgemäße Mine wird insbesondere unter Durchführung nachfolgend ausgeführter Schritte hergestellt:
- Mischen und Granulieren aller Rezepturkomponenten der Mine zu einem Minengranulat
- Extrudieren des Minengranulates bei einer Temperatur im Bereich von 120 bis 200°C auf einem Extruder durch ein geeignetes Mundstück zu endlosen Minensträngen
- Kühlen und Verfestigen des endlosen Minenstranges, und
- Schneiden des endlosen Minenstranges auf Endlänge, insbesondere auf die benötigte Stiftlänge

Je nach Extrusionskopf kann der Minenquerschnitt beliebige Formen annehmen - rund, eckig oder Kombinationen daraus. Des Weiteren besteht die Möglichkeit über eine Mehrfach-Coextrusion verschiedene Minenrezepturen in einem Extrusionskopf zu einer mehrkomponentigen Mine zu verbinden.

Darüber hinaus kann das Minengranulat mittels geeigneter Coextrusionsverfahren mit anderen polymergebundenen Materialien zu einem kompletten Stift extrudiert werden.

## Patentansprüche

1. **Polymergebundene Mine** für Schreib, Zeichen und/oder Malgeräte, insbesondere für Bleistifte oder Farbstifte, umfassend mindestens ein Bindemittel, mindestens ein Wachs, mindestens ein Farbmittel und mindestens einen Füllstoff, **dadurch gekennzeichnet,**
**dass** die Mine als Bindemittel Polylactid aufweist.

2. **Mine** nach Anspruch 1,
**dadurch gekennzeichnet,**
**dass** das mindestens eine Bindemittel aus 10-60 Gew.-% Polylactid, bevorzugt aus 10 bis 40 Gew.% Polylactid oder besonders bevorzugt 10-25 Gew.-% Polylactid gebildet ist.

3. **Mine** nach Anspruch 1 oder Anspruch 2,
**dadurch gekennzeichnet,**
**dass** die Mine
| | |
|---|---|
| 10 bis 60 Gew.-% | Polylactid |
| 2 bis 25 Gew.-% | Wachs |
| 15 bis 70 Gew.-% | Füllstoffe |
| 0 bis 5 Gew.-% | Palmöl |
| 0 bis 30 Gew.% | Farbmittel |
aufweist.

4. **Mine** nach einem der Ansprüche 1 bis 3,
**dadurch gekennzeichnet,**
**dass** das mindestens eine Wachs aus mindestens einem Wachs der Gruppe umfassend Fettsäuren, Stearate, Montanwachse, Amidwachse und Paraffine gebildet ist.

5. **Mine** nach Anspruch 1, 3 oder 4,
**dadurch gekennzeichnet,**
**dass** das Wachs als Ethylen-Bis-Stearamid (EBS) und/oder Calcium-Stearat vorliegt.

6. **Mine** nach einem der Ansprüche 1 oder 3,
**dadurch gekennzeichnet,**
**dass** der mindestens eine Füllstoff mindestens einen Füllstoff aus der Gruppe umfassend Graphit, hexagonales Bornitrid, Schichtsilikate, Kreide, und Schwerspat aufweist.

7. **Mine** nach einem der Ansprüche 1 bis 6,
**dadurch gekennzeichnet,**
**dass** die Mine eine Bleistiftmine ist und
| | |
|---|---|
| 10 bis 60 Gew.-% | Polylactid |
| 2 bis 25 Gew.-% | Wachs |
| 0 bis 5 Gew.-% | Palmöl |
| Rest | Graphit |
aufweist.

8. **Mine** nach einem der Ansprüche 1 bis 7,
**dadurch gekennzeichnet,**
**dass** die Mine eine Bleistiftmine ist und
| | |
|---|---|
| 15 bis 25 Gew.-% | Polylactid |
| 5 bis 15 Gew.-% | Wachs |
| 0,1 bis 2,5 Gew.-% | Palmöl |
| Rest | Graphit |
aufweist.

9. **Mine** nach einem der Ansprüche 1 bis 6,
**dadurch gekennzeichnet,**
**dass** die Mine eine Farbstiftmine ist und
| | |
|---|---|
| 10 bis 60 Gew.% | Polylactid |
| 2 bis 25 Gew.-% | Wachs |
| 1 bis 30 Gew.-% | Farbmittel |
| Rest | Füllstoffe |
aufweist.

10. **Mine** nach Anspruch 9,
**dadurch gekennzeichnet,**
**dass** die Mine eine Farbstiftmine ist und
| | |
|---|---|
| 10 bis 25 Gew.-% | Polylactid |
| 10 bis 20 Gew.-% | Wachs |
| 2 bis 20 Gew.-% | Farbmittel |
| Rest | Füllstoffe |
aufweist.

11. **Verfahren zur Herstellung einer polymergebundenen Mine nach einem** der Ansprüche 1 bis 11,
**dadurch gekennzeichnet,**
**dass** die Mine durch Extrusion gebildet wird.

## Claims

1. Polymer-bound core for writing, drawing and/or marking instruments, particularly for pencils or crayons, comprising at least one binder, at least one wax, at least one colorant and at least one filler, **characterised in that** the core comprises polylactide as binder.

2. Core according to claim 1, **characterised in that** the at least one binder is formed from 10 to 60 weight % polylactide, preferably 10 to 40 weight % poylactide or particularly preferably 10 to 25 weight % polylactide.

3. Core according to claim 1 or claim 2, **characterised in that** the core comprises
| | |
|---|---|
| 10 to 60 weight % | polylactide |
| 2 to 25 weight % | wax |
| 15 to 70 weight % | fillers |
| 0 to 5 weight % | palm oil |
| 0 to 30 weight % | colorant. |

4. Core according to any one of claims 1 to 3, **characterised in that** the at least one wax is formed from at least one wax of the group comprising fatty acids, stearates, montan waxes, amide waxes and paraffins.

5. Core according to claim 1, 3 or 4, **characterised in that** the wax is present as an ethylene-bis-stearamide (EBS) and/or calcium stearate.

6. Core according to one of claims 1 and 3, **characterised in that** the at least one filler comprises at least one filler from the group comprising graphite, hexagonal boron nitride, stratified silicates, chalk and barite.

7. Core according to any one of claims 1 to 6, **characterised in** the core is a pencil core and comprises
| | |
|---|---|
| 10 to 60 weight % | polylactide |
| 2 to 25 weight % | wax |
| 0 to 5 weight % | palm oil |
| remainder | graphite. |

8. Core according to any one of claims 1 to 7, **characterised in that** the core is a pencil core and comprises
| | |
|---|---|
| 15 to 25 weight % | polylactide |
| 5 to 15 weight % | wax |
| 0.1 to 2.5 weight % | palm oil |
| remainder | graphite. |

9. Core according to any one of claims 1 to 6, **characterised in that** the core is a crayon core and comprises
| | |
|---|---|
| 10 to 60 weight % | polylactide |
| 2 to 25 weight % | wax |
| 1 to 30 weight % | colorant |
| remainder | filler. |

10. Core according to claim 9, **characterised in that** the core is a crayon core and comprises
| | |
|---|---|
| 10 to 25 weight % | polylactide |
| 10 to 20 weight % | wax |
| 2 to 20 weight % | colorant |
| remainder | filler. |

11. Method of producing a polymer-bound core according to any one of claims 1 to 11, **characterised in that** the core is formed by extrusion.

## Revendications

1. Mine liée par un polymère pour instruments d'écriture, de dessin et/ou de peinture, notamment pour crayons ou crayons de couleur, comprenant au moins un liant, au moins une cire, au moins un colorant et au moins une charge, **caractérisée en ce que** la mine comprend du polylactide en tant que liant.

2. Mine selon la revendication 1, **caractérisée en ce que** ledit au moins un liant est constitué par 10 à 60 % en poids de polylactide, de préférence 10 à 40 % en poids de polylactide ou de manière particulièrement préférée 10 à 25 % en poids de polylactide.

3. Mine selon la revendication 1 ou la revendication 2, **caractérisée en ce que** la mine comprend :
| | |
|---|---|
| 10 à 60 % en poids | de polylactide, |
| 2 à 25 % en poids | de cire, |
| 15 à 70 % en poids | de charges, |
| 0 à 5 % en poids | d'huile de palme, |
| 0 à 30 % en poids | de colorant (s). |

4. Mine selon l'une quelconque des revendications 1 à 3, **caractérisée en ce que** ladite au moins une cire est constituée par au moins une cire du groupe comprenant les acides gras, les stéarates, les cires de lignite, les cires d'amides et les paraffines.

5. Mine selon la revendication 1, 3 ou 4, **caractérisée en ce que** la cire se présente sous la forme d'éthylène-bis-stéaramide (EBS) et/ou de stéarate de calcium.

6. Mine selon l'une quelconque des revendications 1 ou 3, **caractérisée en ce que** ladite au moins une charge comprend au moins une charge du groupe comprenant le graphite, le nitrure de bore hexagonal, les phyllosilicates, la craie et la barytine.

7. Mine selon l'une quelconque des revendications 1 à 6, **caractérisée en ce que** la mine est une mine de crayon et comprend :
| | |
|---|---|
| 10 à 60 % en poids | de polylactide, |
| 2 à 25 % en poids | de cire, |
| 0 à 5 % en poids | d'huile de palme, |
| le reste | de graphite. |

8. Mine selon l'une quelconque des revendications 1 à 7, **caractérisée en ce que** la mine est une mine de crayon et comprend :
| | |
|---|---|
| 15 à 25 % en poids | de polylactide, |
| 5 à 15 % en poids | de cire, |
| 0,1 à 2,5 % en poids | d'huile de palme, |
| le reste | de graphite. |

9. Mine selon l'une quelconque des revendications 1 à 6, **caractérisée en ce que** la mine est une mine de crayon de couleur et comprend :
| | |
|---|---|
| 10 à 60 % en poids | de polylactide, |
| 2 à 25 % en poids | de cire, |
| 1 à 30 % en poids | de colorant(s), |
| le reste | de charges. |

10. Mine selon la revendication 9, **caractérisée en ce que** la mine est une mine de crayon de couleur et comprend :
| | |
|---|---|
| 10 à 25 % en poids | de polylactide, |
| 10 à 20 % en poids | de cire, |
| 2 à 20 % en poids | de colorant(s), |
| le reste | de charges. |

11. Procédé de fabrication d'une mine liée par un polymère selon l'une quelconque des revendications 1 à 11, **caractérisé en ce que** la mine est formée par extrusion.
